**Europäisches Patentamt**

**European Patent Office**

**Office européen des brevets**

(11) Veröffentlichungsnummer : **0 458 424 A1**

# (12) EUROPÄISCHE PATENTANMELDUNG

(21) Anmeldenummer : **91250019.6**

(22) Anmeldetag : **29.01.91**

(51) Int. Cl.⁵ : **B23P 19/04, F01L 1/46**

(30) Priorität : **19.05.90 DE 4016546**

(43) Veröffentlichungstag der Anmeldung :
**27.11.91 Patentblatt 91/48**

(84) Benannte Vertragsstaaten :
**AT DE ES FR GB IT SE**

(71) Anmelder : **LSW Maschinenfabrik GmbH**
**Uhthoffstrasse 1**
**W-2820 Bremen 70 (DE)**

(72) Erfinder : **Schneller, Christof Emanuel**
**Braut-Eichen-Strasse 9**
**W-2820 Bremen 70 (DE)**

(74) Vertreter : **Goddar, Heinz J., Dr. et al**
**FORRESTER & BOEHMERT**
**Widenmayerstrasse 4/I**
**W-8000 München 22 (DE)**

(54) Verfahren und Vorrichtung zum Montieren von Ventilen im Zylinderkopf eines Motors.

(57)   Es wird ein Verfahren zum Montieren von Ventilen im Zylinderkopf eines Motors offenbart, bei dem die Ventile (8) mit einer Greifeinrichtung aus einem Vorratsbehälter entnommen werden und das jeweilige Ventil mit seinem Ventilschaft in seine Ventilbohrung eingeführt wird, wobei mit Hilfe eines Positionsfinders (1) der Ventilschaft genau in die maßliche Horizontalposition über die Ventilschaftbohrung (9) gefahren und dann durch eine reine Vertikalbewegung in die Bohrung abgesenkt wird.

Die Vorrichtung zum Durchführen des Verfahrens umfaßt eine Steckeinrichtung, die horizontal schwimmend mit dem Positionsfinder mitgeführt wird und in einer maßlichen Horizontalposition festgehalten wird, wenn der Positionsfinder die Montagestellung festgelegt hat.

EP 0 458 424 A1

Fig.1

Die Erfindung betrifft ein Verfahren zum Montieren von Ventilen im Zylinderkopf eines Motors, bei dem die Ventile mit einer Greifeinrichtung aus einem Vorratsbehälter entnommen werden und das jeweilige Ventil mit seinem Ventilschaft in seine Ventilbohrung eingeführt wird. Die Erfindung betrifft weiterhin eine Vorrichtung zum Montieren von Ventilen, insbesondere zum Durchführen des Verfahrens. Lange Zeit hat es sich als zweckmäßig erwiesen, Ventile mit ihren Ventilschäften von Hand in den jeweiligen Zylinderkopf einzusetzen, da nur so Beschädigungen an der Ventilschaftführung, die im Zylinderkopf eingesetzt ist, und am Ventilschaft vermieden werden konnten.

Die automatische Ventilmontage hat sich dagegen oftmals als unbefriedigend erwiesen. Üblicherweise wurde ein Halter verwendet, der den Ventilschaft möglichst genau in vertikaler Richtung auf die Öffnung der Ventilführungsbuchse bewegt. Wegen der häufig auftretenden Abweichungen einerseits und der nur geringen Eigenzentrierwirkung des Ventilschaftes andererseits konnte es jedoch nicht ausbleiben, daß unerwünscht Abrieb am Ventilschaft und an der Ventilschaftführung auftrat.

Eine andere Möglichkeit der automatischen Ventilmontage ist in der DE-OS 34 09 904 beschrieben. Bei diesem Verfahren werden die Ventile mit einer Greifeinrichtung aus einem Behälter entnommen und mit einer Schrägstellung ihrer Ventilschäfte auf den oberen Rand der Führungsbuchse aufgesetzt. Anschließend erfolgt das Aufrichten des Ventiles, so daß dieses durch die Wirkung seines Eigengewichtes in die Führungsbuchse hineingleitet, wobei es entspannt gehalten wird. Bei diesem Verfahren wird das Einsetzen von Hand durch die Maschine simuliert. Zwar gelingt das Einsetzen auf diese Weise bei weitgehender Beschädigungsfreiheit an Führungsbuchse und Ventilschaft, jedoch ist das Verfahren relativ zeitaufwendig, und in einem gewissen Grad von dem Zufall einer annähernd korrekten Stellung des Ventilschaftes abhängig, so daß der eigentlich gewünschte Automatisierungseffekt nicht voll durchgreifen kann.

Es ist daher die Aufgabe der Erfindung, ein Verfahren und eine Vorrichtung der eingangs genannten Gattung anzugeben, bei dem das Einsetzen der Ventile maßgenau vorgenommen werden kann und dessen Zeitbedarf möglichst gering ist, wobei Zufälligkeiten beim Anstellen des Ventils ausgeschlossen sein sollen.

Diese Aufgabe wird von einem Verfahren mit den Merkmalen des Kennzeichens von Anspruch 1 gelöst, vorteilhafte Ausgestaltungen des Verfahrens sind Gegenstand der auf diesen Anspruch rückbezogenen Unteransprüche. Eine Vorrichtung zum Durchführen des Verfahrens ist Gegenstand von Anspruch 4, deren vorteilhafte Ausgestaltungen wiederum in den auf diesen Anspruch rückbezogenen Unteransprüchen angegeben sind.

Beim erfindungsgemäßen Verfahren wird mit Hilfe eines Positionsfinders der Ventilschaft genau in die maßliche Horizontalposition über die Ventilschaftbohrung gefahren und dann durch eine Vertikalbewegung in die Bohrung abgesenkt. Es wird daher mittels des Positionsfinders eine Vorzentrierung so vorgenommen, daß das eigentliche Einsetzen des Ventiles in einer reinen Vertikalbewegung durchgeführt wird.

Der Positionsfinder kann in den Zylinderkopf eingefahren werden, wodurch die Horizontalposition des zu montierenden Ventils bestimmt wird. Dazu ist der Positionsfinder, in Form eines Zentrierkegels, Zentrierstiftes oder Meßfühlers mit Korrektursteuerung, an einer elektrisch, pneumatisch oder hydraulisch antreibbaren Zustelleinrichtung nahezu spielfrei befestigt. Wenn die maßliche Horizontalposition so festgelegt ist, befindet sich eine mitgeführte Steckeinrichtung, die im Millimeterbereich in allen Horizontalrichtungen frei beweglich aufgehängt ist, in der maßlich richtigen Position über der Ventilschaftführung. Die Aufhängung wird dann rasterfrei verriegelt, so daß die Steckeinrichtung exakt fixiert bleibt.

Sodann wird der Positionsfinder mit seiner Halterung über die Zustelleinrichtung aus dem Störbereich des zu montierenden Ventils gefahren.

Die Greifeinrichtung hat dem Vorratsbehälter ein Ventil entnommen, welches nun der Steckeinrichtung zugeführt wird. In seiner Montagestellung mit dem Ventilschaft nach unten und in einer definierten Höhe über der Schaftführung wird das Ventil einem zur Steckeinrichtung gehörenden Zentriergreifer übergeben, der ebenfalls in einer definierten Höhe, nun bezogen auf das Ventil, angeordnet ist. Im Zentriergreifer liegt das Ventil maßbezogen zu der Ventilschaftführung. Die Greifeinrichtung fährt nun zurück, um ein neues Ventil abzuholen.

Der Zentriergreifer öffnet so weit, daß das Ventil mit Führungsspiel in Längsrichtung gelagert ist und zwangsfrei in die Ventilschaftführung gleiten kann. Es wird dann die Höhe abgefragt, in der das Ventil die verkantungsfreie Tiefe erreicht hat, wozu eine pneumatische Taststange oder dergleichen verwendet werden kann. Diese Taststange wird weiterhin dazu eingesetzt, das Ventil in die vorgeschriebene Tiefe zu stecken, sobald der Zentriergreifer vollständig geöffnet hat. Der Antrieb der Taststange ist so ausgelegt, daß der Widerstand der Ventilschaftdichtung im unteren Bereich der Ventilschaftführung überwunden werden kann.

Das Verfahren eignet sich nicht nur zum Montieren von Ventilen, es ist auch für andere genau zu montierende Bauteile einsetzbar. Gegebenenfalls muß die Vorrichtung zum Durchführen des Verfahrens dann an die Erfordernisse dieses Bauteiles angepaßt werden.

Im folgenden soll die Erfindung lediglich beispielhaft anhand der beigefügten Zeichnung erläutert werden. Es zeigt:

Fig. 1 eine Schnittansicht einer Vorrichtung zum Durchführen des erfindungsgemäßen Verfahrens,

Fig. 2 eine Schnittansicht des Zentriergreifers, und

Fig. 3 eine Detailansicht des Zentriergreifers aus Fig. 2, wobei die Greifarme in unterschiedlichen positionen dargestellt sind.

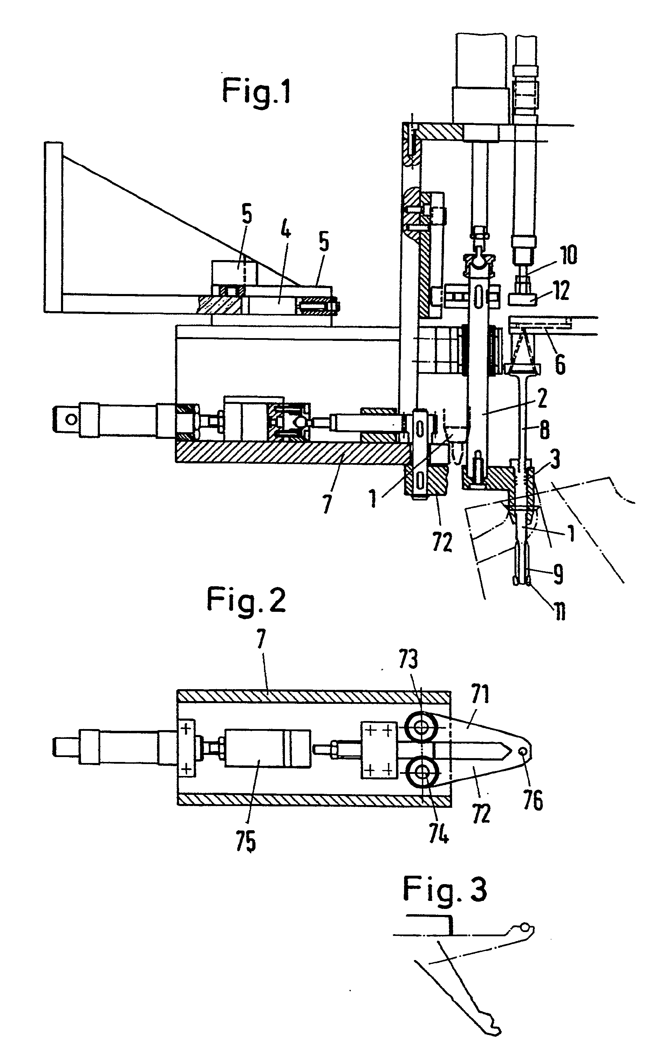

In Fig. 1 ist eine Ventilschaftführung 9 dargestellt, in deren unterem Bereich eine Ventilschaftdichtung 11 angeordnet ist. Durch diese beiden Bauteile, insbesondere durch die Ventilschaftführung 9, ist die Position des zu montierenden Ventils 8 festgelegt. Um diese maßliche Horizontalposition zu ermitteln, ist an einer Zustelleinrichtung 2 ein positionsfinder in Form eines Zentrierkegels 1 vorgesehen. Dieser Zentrierkegel 1 ist ein stiftartiger Körper, dessen unteres Ende konisch zulaufend ausgeformt ist. Dabei ist diese Abschrägung für das untere Ende so gewählt, daß dadurch eine Eigenzentrierwirkung des Zentrierkegels 1 auftreten kann. Die Zustelleinrichtung 2 führt den Zentrierkegel 1 nun so, daß dessen Spitze in die Ventilschaftführung 9 gesetzt wird. Über ein als Feder 3 ausgebildetes Differentialelement ist ein Meßausgleich in der Höhe zwischen dem dann zu montierenden Ventil 8 und der Einrichtung 2 möglich.

Mit der Zustelleinrichtung 2 wird die eigentliche Steckeinrichtung, die im wesentlichen aus einem Zentriergreifer 7 und einer fixierbaren Aufhängung 4 besteht, mitgeführt. Sobald also der Zentrierkegel 1 seine Endposition in der Ventilschaftführung 9 erreicht hat, ist damit auch deren maßliche Position, insbesondere die des Zentriergreifers 7, festgelegt.

Der Zentriergreifer 7 ist an der in allen Horizontalrichtungen im Millimeterbereich frei beweglichen Aufhängung 4 angebracht. Die Aufhängung 4 ist mit einer Klemmeinrichtung 5 versehen, mit der die Aufhängung 4 rasterfrei verriegelt werden kann. Somit ist die Horizontalposition, die durch die Vorzentrierung mittels des Zentrierkegels 1 ermittelt wurde, eingestellt. Der Zentrierkegel 1 wird danach über die Zustelleinrichtung 2 aus der Ventilschaftführung 9 und weiterhin aus dem Störbereich des zu montierenden Ventils 8 ausgefahren, ohne daß die Horizontalposition des Zentriergreifers 7 dadurch verändert würde. Der zurückgezogene Zentrierkegel 1 ist in Fig. 1 gestrichelt dargestellt.

Das zu montierende Ventil 8 wird beispielsweise einem Vorratsbehälter entnommen und mittels einer Greifeinrichtung 6 dem jeweiligen Zylinderkopf zugeführt. Das Ventil 8 befindet sich dabei in seiner Montagestellung mit nach unten gerichtetem Ventilschaft. Die Endposition ist erreicht, wenn sich das untere Ende des Ventilschaftes etwa 2 bis 3 mm über der Ventilschaftführung 9 befindet. Das Ventil 8 wird von der Greifeinrichtung 6 an den Zentriergreifer 7 übergeben, der sich ebenfalls in einer definierten Höhe in bezug auf das Ventil 8 befindet. Der Zentriergreifer 7 hält das Ventil 8 nun in der maßlichen Horizontalposition zu der Ventilschaftführung 9. Die Greifeinrichtung 6 ist jetzt frei und fährt zurück, um ein neues Ventil abzuholen.

Fig. 2 zeigt den Zentriergreifer 7 im Detail. Zwei Greifarme 71, 72 sind um Achsen 73, 74 verschwenkbar, so daß je nach Erfordernis eine mehr oder weniger weite Öffnung der Greifarme 71, 72 zueinander erfolgen kann. Der Antrieb der Greifarme 71, 72 erfolgt hydraulisch, elektrisch oder pneumatisch und wird durch ein Getriebe 75 vermittelt. Im geschlossenen Zustand der Greifarme 71, 72 bilden diese in ihrem vorderen Bereich eine Halteöffnung 76, in der der Ventilschaft des Ventiles 8 festgehalten wird.

Fig. 3 zeigt beispielhaft einen der Greifarme in einer weit geöffneten Stellung. Es sind jedoch auch alle möglichen Zwischenpositionen zwischen der geschlossenen Stellung, wie in Fig. 2 gezeigt, und der Stellung gemäß Fig. 3 erreichbar.

Nachdem der Zentriergreifer 7 das Ventil 8 übernommen hat, öffnet er so weit, daß das Ventil 8 mit Führungsspiel in Längsrichtung gelagert ist und zwangsfrei in die Ventilschaftführung 9 gleiten kann. Wenn das Ventil 8 nun in die Ventilschaftführung 9 abgesenkt ist, wird die erreichte Höhe mittels einer Taststange 10 abgefragt. Diese Taststange 10 ist ebenfalls Bestandteil der Steckeinrichtung und ist beim Vorzentrieren durch den Zentrierkegel mitgeführt worden, so daß ein plattenartiger Ansatz 12 am unteren Ende der Taststange 10 sich in vertikaler Richtung genau über dem Ventilteller des Ventiles 8 befindet. Die Taststange 10 ist pneumatisch angetrieben und wird abgesenkt, bis der Ansatz 12 auf dem Ventilteller aufliegt. So kann zwangsfrei die Höhe abgefragt werden, in der das Ventil 8 verkantungsfrei ruht.

Nun werden die Greifarme 71, 72 des Zentriergreifers 7 weit geöffnet, beispielsweise in die Stellung der Fig. 3, so daß das Ventil 8 jetzt allein durch die Taststange 10 belastet ist. Mit Hilfe des Antriebes der Taststange 10 wird der Widerstand der Ventilschaftdichtung 11 überwunden, so daß das Ventil 8 in seiner vorgeschriebene Tiefe in die Ventilschaftbohrung des Zylinderkopfes eingeschoben werden kann.

Es wurde gefunden, daß das Montieren von Ventilen nach dem erfindungsgemäßen Verfahren nur etwa 70 % des zeitlichen Aufwandes gegenüber konventionellen Verfahren erfordert.

Durch das Vorzentrieren der Steckeinrichtung, die über die Aufhängung in der Horizontalen schwimmend gelagert ist, dann aber fixiert werden kann, kann die Ventilmontage schnell und maßgenau durchgeführt werden.

Die in der vorstehenden Beschreibung, in der Zeichnung sowie in den Ansprüchen offenbarten Merkmale der Erfindung können sowohl einzeln als auch in beliebiger Kombination für die Verwirklichung der Erfindung in ihren verschiedenen Ausführunsformen wesentlich sein.

## Patentansprüche

1. Verfahren zum Montieren von Ventilen im Zylinderkopf eines Motors, bei dem die Ventile mit einer Greifeinrichtung aus einem Vorratsbehälter entnommen werden und das jeweilige Ventil mit seinem Ventilschaft in seine Ventilbohrung eingeführt wird,
**dadurch gekennzeichnet,**
daß mit Hilfe eines Positionsfinders der Ventilschaft genau in die maßliche Horizontalposition über die Ventilschaftbohrung gefahren und dann durch eine Vertikalbewegung in die Bohrung abgesenkt wird.

2. Verfahren nach Anspruch 1,
dadurch gekennzeichnet,
daß der Positionsfinder in den Zylinderkopf eingefahren wird, wodurch die Horizontalposition des zu montierenden Ventils festgelegt ist,
daß eine Steckeinrichtung für Ventile in diese maßliche Horizontalposition geführt wird,
daß der Positionsfinder aus dem Störbereich des zu montierenden Ventils entfernt wird, und
daß das Ventil der Steckeinrichtung zugeführt und in die maßliche Horizontalposition gebracht wird.

3. Verfahren nach Anspruch 2,
dadurch gekennzeichnet,
daß das Ventil der Steckeinrichtung durch die Greifeinrichtung zugeführt und vor dem Absenken einem Zentriergreifer übergeben wird, der das Ventil in die maßliche Horizontalposition bringt.

4. Vorrichtung zum Montieren von Ventilen im Zylinderkopf eines Motors, insbesondere zum Durchführen des Verfahrens nach einem der Ansprüche 1 bis 3, mit einer Greifeinrichtung zum Entnehmen jeweils eines Ventils aus einem Vorratsbehälter, welche das Ventil auch seiner Montageposition zuführt,
dadurch gekennzeichnet,
daß ein an einer Zustelleinrichtung (2) spielarm befestigter Positionsfinder (1) im in den Zylinderkopf eingefahrenen Zustand die Horizontalposition des Ventils (8) festlegt.

5. Vorrichtung nach Anspruch 4,
dadurch gekennzeichnet,
daß der Positionsfinder (1) ein Zentrierstift, ein Zentrierkegel oder ein Meßfühler mit Korrektur-Steuerung ist.

6. Vorrichtung nach Anspruch 4 oder 5,
dadurch gekennzeichnet,
daß eine mit der Zustelleinrichtung (2) mitgeführte Steckeinrichtung für Ventile vorgesehen ist, die in allen Horizontalrichtungen frei beweglich ist.

7. Vorrichtung nach Anspruch 6,
dadurch gekennzeichnet,
daß für die Steckeinrichtung eine rasterfrei verriegelbare Aufhängung (4) vorgesehen ist.

8. Vorrichtung nach einem der Ansprüche 4 bis 7,
dadurch gekennzeichnet,
daß ein Zentriergreifer (7) vorgesehen ist.

9. Vorrichtung nach einem der Ansprüche 4 bis 8,
dadurch gekennzeichnet,
daß sie eine Taststange (10) umfaßt, welche die Höhe des eingesetzten Ventils (8) erfaßt und das Ventil (8) auch gegen den Widerstand einer Ventilschaftdichtung (11) in eine vorbestimmte Tiefe der Ventilschaftbohrung bringt.

# Fig.1

# Fig.2

# Fig.3

| | Europäisches Patentamt | EUROPÄISCHER RECHERCHENBERICHT | Nummer der Anmeldung |
|---|---|---|---|
| | | | EP 91 25 0019 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | US-A-4833765 (BOHLAND)<br>* Spalte 1, Zeilen 13 - 31 *<br>* Spalte 2, Zeilen 13 - 25 *<br>* Spalte 3, Zeilen 10 - 17 *<br>* Spalte 3, Zeilen 44 - 68 *<br>* Spalte 4, Zeilen 24 - 37 *<br>* Spalte 5, Zeile 42 - Spalte 6, Zeile 15;<br>Figuren 1, 2, 4, 5, 9 * | 1 | B23P19/04<br>F01L1/46 |
| Y | | 2-4, 8 | |
| | ---- | | |
| Y | PATENT ABSTRACTS OF JAPAN<br>vol. 8, no. 152 (M-309)(1589) 14 Juli 1984,<br>& JP-A-59 047129 (MITSUBISHI DENKI K.K.) 16 März 1984,<br>* das ganze Dokument * | 2-4, 8 | |
| | ---- | | |
| D,A | DE-A-3409904 (J.A. KRAUSE)<br>* Anspruch 1; Figuren 1-13 * | 1, 4 | |
| | ---- | | |
| A | US-A-4845821 (SAKIMORI ET AL.)<br>* Spalte 1, Zeilen 12 - 64 *<br>* Spalte 4, Zeile 10 - Spalte 5, Zeile 37;<br>Figuren 1-3, 6-10 * | 1 | RECHERCHIERTE SACHGEBIETE (Int. Cl.5)<br><br>B23P<br>F01L |
| | ---- | | |
| A | US-A-4879795 (NAKAMURA ET AL.)<br>* Spalte 1, Zeilen 7 - 12 *<br>* Spalte 4, Zeile 66 - Spalte 5, Zeile 7;<br>Figuren 2, 14, 15 * | 9 | |
| | ----- | | |

Der vorliegende Recherchenbericht wurde für alle Patentansprüche erstellt

| Recherchenort | Abschlußdatum der Recherche | Prüfer |
|---|---|---|
| DEN HAAG | 13 AUGUST 1991 | ALCONCHEL Y UNGRIA J |